# EUROPEAN PATENT APPLICATION

(11) **EP 4 645 398 A1**
(43) Date of publication of application: **05.11.2025**
(21) Application number: 25171256.8
(22) Date of filing: 17.04.2025
(51) Int. Cl.: H01M 4/02

(54) **ELECTRODE FOR RECHARGEABLE LITHIUM BATTERY, A MANUFACTURING METHOD THEREOF, AND RECHARGEABLE LITHIUM BATTERY INCLUDING THE SAME**

(30) Priority: 19.04.2024 KR 20240052582
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: Lee, Jin Hyon, 16678 Suwon-si, Gyeonggi-do (KR); Paik, Un Gyu, 06289 Seoul (KR); Song, Tae Seup, 03180 Seoul (KR); Kim, Ji Woon, 02858 Seoul (KR); Kim, Min Sung, 02782 Seoul (KR); Cho, Chae Woong, 16678 Suwon-si, Gyeonggi-do (KR)
(74) Representative: Gulde & Partner

(57) **Abstract**

The present disclosure provides an electrode for a rechargeable lithium battery and a rechargeable lithium battery including the electrode. The electrode includes an electrode active material layer, wherein the electrode active material layer includes an active material having a catecholamine-based compound-containing layer and a first binder having a catecholamine-based compound-containing layer.

## Description

### BACKGROUND

### 1. Field

One or more embodiments of the present disclosure relate to an electrode for a rechargeable lithium battery and a rechargeable lithium battery including the electrode. Further, a manufacturing method for the electrode is provided.

### 2. Description of Related Art

With the rapid spread and popularization of electronic devices that use batteries, such as mobile phones, laptop computers, and electric vehicles, the demand for rechargeable batteries with relatively high energy density and high capacity has rapidly increased. Accordingly, research and development for improving the performance of such rechargeable batteries, such as lithium ion rechargeable batteries, is actively underway.

A rechargeable lithium battery is a battery including a positive electrode and a negative electrode, each of which includes an active material which allows for intercalation and deintercalation of lithium ions, and an electrolyte, and electrical energy is generated through an oxidation-reduction reaction taking place when lithium ions are intercalated and deintercalated to and from the positive electrode and the negative electrode. For example, the electrical energy is generated when lithium ions are intercalated into the positive electrode and/or deintercalated from the negative electrode during the discharge process.

Nowadays, research for manufacturing an electrode including a dry electrode film that does not use a solvent has drawn significant attention and is actively underway. The dry electrode film generally includes an electrode active material, a binder, and/or the like and is manufactured in the form of a film.

The information disclosed in this Background section is intended to enhance understanding of the described technology. It may contain information that does not constitute prior art for a person of ordinary skill in the art.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward an electrode including a dry electrode film, which provides the effects of suppressing side reactions of a binder in the dry electrode film and reducing irreversible capacity loss, and a rechargeable lithium battery including the electrode.

Additional aspects will be set forth in part in the description which follows and, in part, will be apparent from the description, or may be learned by practice of the presented embodiments of the disclosure.

According to one or more embodiments of the present disclosure, an electrode includes an electrode active material layer comprising an active material and a binder, wherein the active material and the binder is coated with a catecholamine-based compound-containing layer, the catecholamine-based compound-containing layer comprising or consisting of a catecholamine-based compound. For example, the electrode active material layer may be a dry electrode film including an active material having a catecholamine-based compound-containing layer and a first binder having a catecholamine-based compound-containing layer.

In one or more embodiments, the catecholamine-based compound-containing layer may be present on a surface of the active material and a surface of the first binder.

In one or more embodiments, the catecholamine-based compound-containing layer may be present on a surface of a fiber of the first binder.

In one or more embodiments, the catecholamine-based compound may be included in an amount of 95 wt% or more in the catecholamine-based compound-containing layer based on a total weight of 100 wt% of the catecholamine-based compound-containing layer.

In one or more embodiments, the catecholamine-based compound may include one or more selected from among dopamine, norepinephrine, and epinephrine, and a polymer thereof.

In one or more embodiments, the catecholamine-based compound may be a polydopamine.

In one or more embodiments, the polymer of , the catecholamine-based compound may include a repeating unit of one or more (e.g., any) selected from among Chemical Formulas 1, 2, 3, and 4:

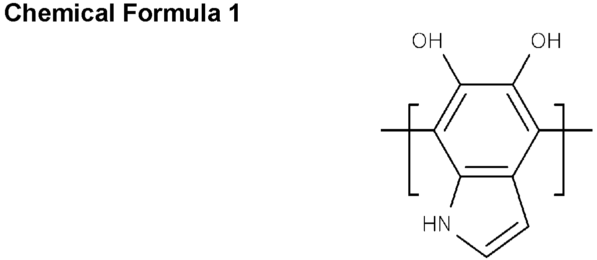

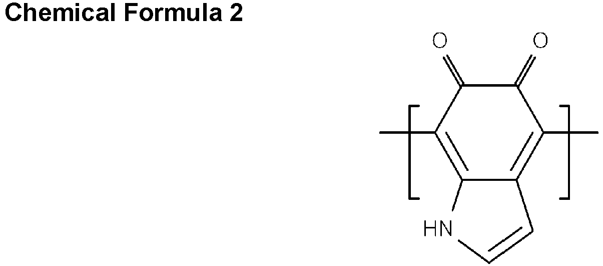

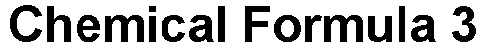

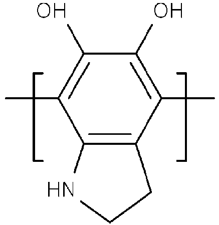

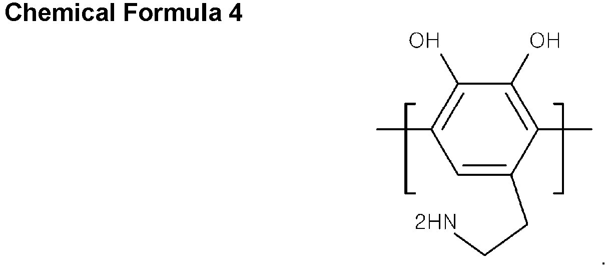

In one or more embodiments, the first binder may be included in a fibrillated state in the dry electrode film.

In one or more embodiments, the first binder may include polytetrafluoroethylene (PTFE), a polyolefin, or a mixture thereof.

In one or more embodiments, the catecholamine-based compound-containing layer has a thickness in a range of 0.1 nanometers (nm) to 20 nm.

In one or more embodiments, the dry electrode film may include 80 wt% to 99.5 wt% of the active material and 0.5 wt% to 20 wt% of the first binder based on a total weight of 100 wt% of the dry electrode film.

In one or more embodiments, the catecholamine-based compound-containing layer may be a protective layer.

In one or more embodiments, the active material may be a positive electrode active material or a negative electrode active material.

In one or more embodiments, the active material may include a carbon-based negative electrode active material.

According to another aspect of the present invention, there is provided a manufacturing method for the afore-mentioned electrode. The method includes the steps of:
(a) preparing a powdery mixture comprising an electrode active material and a binder;
(b) preparing a mixture mass by kneading the powdery mixture;
(c) obtaining an electrode powder by pulverizing the mixture mass;
(d) obtaining a film by calendering the electrode powder; and
(e) treating the film with a catecholamine-based compound-containing solution.

### BRIEF DESCRIPTION OF DRAWINGS

The accompanying drawings are included to illustrate example embodiments of the present disclosure and serve to facilitate understanding of the technical idea of the present disclosure together with the detailed description of the description provided herein, the present disclosure should not be limitedly interpreted on the basis of the drawings. The above and other aspects, features, and advantages of certain embodiments of the present disclosure will be more apparent from the following description taken in conjunction with the accompanying drawings.
FIGS. 1 - 4 are each a schematic diagram illustrating a rechargeable lithium battery according to one or more embodiments of the present disclosure.
FIG. 5 is a photograph of a polydopamine-coated polytetrafluoroethylene (PTFE) containing film manufactured in the Examples according to one or more embodiments of the present disclosure.
FIGS. 6 - 8 show the Fourier transform infrared spectroscopy (FT-IR) analysis results of dry electrode films of Example 1 (dotted line) and Comparative Example 1 (solid line) according to one or more embodiments of the present disclosure.
FIG. 9 shows the X-ray photoelectron spectroscopy (XPS) analysis results of a negative electrode of Comparative Example 1 according to one or more embodiments of the present disclosure.
FIG. 10 shows the XPS analysis results of a negative electrode of Example 1 according to one or more embodiments of the present disclosure.
FIG. 11 shows the results showing the relationship between the normalized capacity and voltage of batteries having electrodes of the Examples and Comparative Examples according to one or more embodiments of the present disclosure. In FIG. 11, the dotted line represents Example 1, the solid line represents Comparative Example 1, and the two-dot chain line represents Comparative Example 2.
FIG. 12 shows the results showing the relationship between the normalized capacity and voltage of batteries having electrodes of the Examples according to one or more embodiments of the present disclosure.
FIG. 13 shows the capacity of batteries according to the cycle number thereof according to one or more embodiments of the present disclosure. In FIG. 13, ● represents Example 1, ■ represents Comparative Example 1, and A represents Comparative Example 2.
FIG. 14 shows the coulombic efficiency of batteries according to the cycle number thereof according to one or more embodiments of the present disclosure. In FIG. 14, ● represents Example 1, ■ represents Comparative Example 1, and ▲ represents Comparative Example 2.
FIG. 15 shows the results of evaluating ionic resistance of batteries after 30 cycles according to one or more embodiments of the present disclosure. In FIG. 15, the dotted line represents Example 1, the solid line represents Comparative Example 1, and the two-dot chain line represents Comparative Example 2.
FIG. 16 shows the results of scanning electron microscopy (SEM) analysis of negative electrode surfaces of batteries after 1 cycle according to one or more embodiments of the present disclosure. In FIG. 16, the left photograph shows the results of Comparative Example 1, the middle photograph shows the results of Example 1, and the right photograph shows the results of Comparative Example 2.
FIG. 17 shows the results of SEM analysis of negative electrode surfaces of batteries after 30 cycles according to one or more embodiments of the present disclosure. In FIG. 17, the left photograph shows the results of Comparative Example 1, the middle photograph shows the results of Example 1, and the right photograph shows the results of Comparative Example 2.

### DETAILED DESCRIPTION

Hereinafter, example embodiments of the present disclosure will be described in detail with reference to the accompanying drawings. Prior to this, terms or words used in the present disclosure and claims should not be construed as being limited to general or dictionary meanings and should be interpreted with meanings and concepts consistent with the technical spirit of the present disclosure on the basis of the principle that the applicant can appropriately define the concept of a term to best describe his or her disclosure. Therefore, the embodiments described herein and configurations shown in the drawings are merely example embodiments of the present disclosure and do not represent all the technical spirit of the present disclosure. Accordingly, it should be understood that various equivalents and modifications that may replace the embodiments may be present at the time of filing the present application.

Also, the expressions "comprise," "include," "have" and/or "comprising," "including," "having" used in this disclosure specify the presence of mentioned shapes, numbers, steps, operations, members, elements, and/or groups thereof and do not exclude the presence or addition of one or more other shapes, numbers, steps, operations, members, elements, and/or groups thereof.

In addition, in order to help the understanding of the disclosure, the accompanying drawings may not be drawn to scale, and the dimensions of some components may be exaggerated. Also, the same reference numerals may be assigned to the same components in different embodiments.

Although terms such as "first" and "second" are used to describe various components, of course, the components are not limited by the terms. The terms are only used to distinguish one component from another component, for example, a first component may also be a second component unless particularly stated otherwise.

Throughout the disclosure, each component may be singular or plural unless particularly stated otherwise. For example, as used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

In the present disclosure, If a configuration is described as being disposed/arranged "above (or below)" a component or "on (or under)" a component, this may not only mean that the configuration is disposed/arranged in contact with an upper surface (or lower surface) of the component but also mean that another (e.g., one or more intervening) configuration may be interposed between the component and the configuration disposed on (or under) the component.

Also, if a certain component is described as being "connected," "coupled," or "linked" to another component, it should be understood that, although the components may be directly connected or linked to each other, another component (e.g., one or more intervening components) may be "interposed" between the two components, or the two components may be "connected." "coupled," or "linked" to each other through another component. In addition, if a certain part is described as being electrically coupled to another part, this not only includes embodiments in which the two parts are directly connected, but also includes embodiments in which the two components are connected with another device disposed therebetween.

Throughout the disclosure, "A and/or B" or "A/B" may refer to A, B, or A and B unless particularly stated otherwise. That is, the term "and/or" includes any and all combinations of a plurality of listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation. "C to D" means larger than or equal to C and smaller than or equal to D unless particularly stated otherwise.

The terms used in the present disclosure are for describing the embodiments of the present disclosure and are not intended to limit the present disclosure.

### Electrode

An electrode according to one or more embodiments may be a positive electrode or a negative electrode depending on whether a positive electrode active material or a negative electrode active material is included as an electrode active material described herein.

For example, in one or more embodiments, the electrode may be a negative electrode.

The electrode according to one or more embodiments may include an electrode active material layer, and the electrode active material layer is a dry electrode film including: an active material having a catecholamine-based compound-containing layer; and a first binder having a catecholamine-based compound-containing layer.

In the electrode, by each of the active material and the first binder having a catecholamine-based compound-containing layer, the initial efficiency and service life of a battery including the electrode may be increased.

The first binder may include a fibrillable binder. The fibrillable binder may include a binder with a low lowest unoccupied molecular orbital (LUMO) level. In an electrode film including the binder with a low LUMO level, the reduction stability of the electrode film may decrease due to the low LUMO level. The low reduction stability may cause side reactions of the binder and weaken fibrillation, and thus degrade binding properties and cause irreversible capacity loss of a battery. For example, this may cause a decrease in the initial efficiency and service life of the battery.

The catecholamine-based compound-containing layer is a protective layer and is included in each of the active material and the first binder to suppress the side reaction and mitigate irreversible capacity loss of the battery, thereby increasing the initial efficiency and service life of the battery.

In one or more embodiments, the binder with a low LUMO level may have a LUMO level of +8 eV or less, for example, a LUMO level in a range of 0 to +8 eV.

The catecholamine-based compound-containing layer may include a catecholamine-based compound. In one or more embodiments, the catecholamine-based compound may be included in an amount of 95 wt% or more, for example, an amount in a range of 95 wt% to 100 wt%, for example, an amount of 100 wt%, in the catecholamine-based compound-containing layer, based on a total weight of 100 wt% of the catecholamine-based compound-containing layer. Within the above range, there may be an effect of increasing the initial efficiency and service life of the battery.

The catecholamine-based compound is a monoamine-based compound derived from catechol, and for example, may include one or more selected from among dopamine, norepinephrine, and epinephrine, or a polymer thereof. In one or more embodiments, the catecholamine-based compound may include dopamine.

In one or more embodiments, the catecholamine-based compound may be included as the catecholamine-based compound itself in the catecholamine-based compound-containing layer.

In one or more embodiments, the catecholamine-based compound may be included as one or more selected from among an acid addition salt of the catecholamine-based compound and a base addition salt of the catecholamine-based compound in the catecholamine-based compound-containing layer.

In one or more embodiments, the catecholamine-based compound may be polymerized and included as an oligomer or a polymer thereof in the catecholamine-based compound-containing layer. In one or more embodiments, the catecholamine-based compound-containing layer may include a polydopamine. The polydopamine may include a polymer obtained by polymerizing dopamine as a monomer.

In one or more embodiments, the polymer of the catecholamine-based compound may include a repeating unit of one or more (e.g., any) selected from among Chemical Formulas 1, 2, 3, and 4:

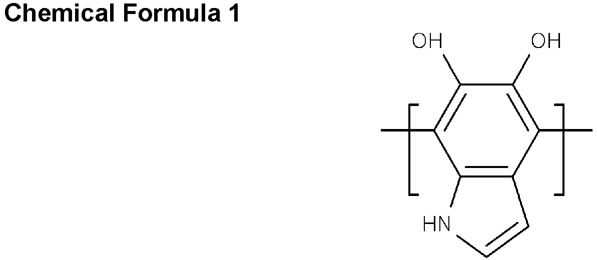

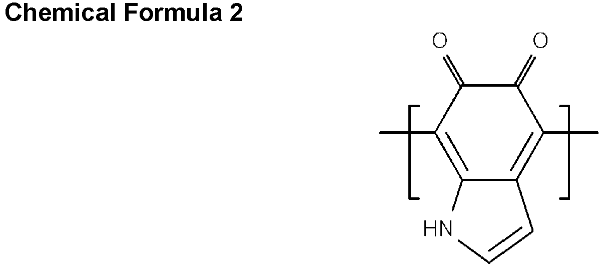

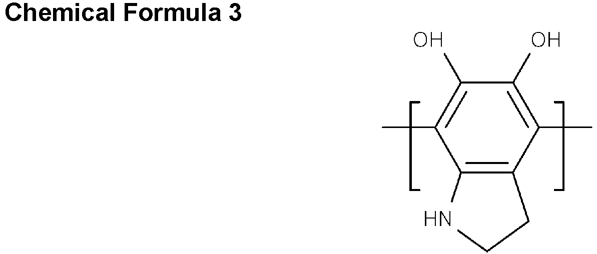

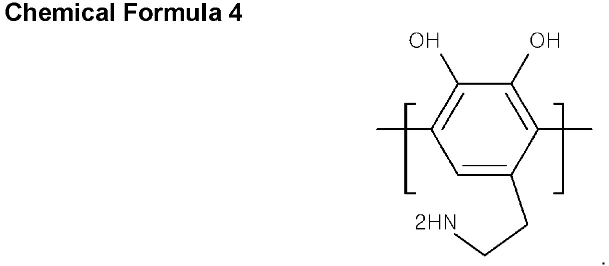

In one or more embodiments, the catecholamine-based compound-containing layer may have a thickness in a range of 0.1 nm to 20 nm, for example, 0.1, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20 nm, from 1 nm to 3 nm. Within the above range, the effects of increasing the initial efficiency and service life of the battery may be provided, and resistance may not be increased.

According to one or more embodiments, the catecholamine-based compound-containing layer may be present on a surface of the active material and a surface of the first binder. In this regard, the degree of suppressing the side reaction may be higher. In one or more embodiments, the catecholamine-based compound-containing layer may be present on a surface of the first binder which is fibrillable.

The electrode active material layer will be described in detail hereinafter.

The electrode active material layer may be a freestanding dry electrode film. The freestanding dry electrode film may refer to that electrode powder including the electrode active material and the first binder is manufactured into the form of a strip or a sheet having a predetermined thickness.

According to one or more embodiments, the electrode active material may be a positive electrode active material (e.g., in a form of particles).

As the positive electrode active material, a compound capable of reversible intercalation and deintercalation of lithium (a lithiated intercalation compound) may be used. For example, in one or more embodiments, one or more of composite oxides of lithium and a metal selected from among cobalt, manganese, nickel, and a combination thereof may be used.

The composite oxides may be lithium transition metal composite oxides. Non-limiting examples of the composite oxides may include lithium nickel oxides, lithium cobalt oxides, lithium manganese oxides, lithium iron phosphate compounds, cobalt-free nickel-manganese oxides, or a (e.g., any suitable) combination thereof.

In one or more embodiments, a compound represented by any one of the following chemical formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}CO_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the foregoing chemical formulas, A may be nickel (Ni), cobalt (Co), manganese (Mn), or a (e.g., any suitable) combination thereof; X may be aluminum (Al), Ni, Co, Mn, chromium (Cr), iron (Fe), magnesium (Mg), strontium (Sr), vanadium (V), a rare earth element, or a (e.g., any suitable) combination thereof; D may be oxygen (O), fluorine (F), sulfur (S), phosphorus (P), or a (e.g., any suitable) combination thereof; G may be Al, Cr, Mn, Fe, Mg, lanthanum (La), cerium (Ce), Sr, V, or a (e.g., any suitable) combination thereof; and L¹ may be Mn, Al, or a (e.g., any suitable) combination thereof.

According to one or more embodiments, the electrode active material may be a negative electrode active material (e.g., in a form of particles).

The negative electrode active material may include a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions may be a carbon-based negative electrode active material, and may include, for example, crystalline carbon, amorphous carbon, or a combination thereof. Non-limiting examples of the crystalline carbon may include graphite such as natural graphite and/or artificial graphite, and non-limiting examples of the amorphous carbon may include soft carbon, hard carbon, mesophase pitch carbide, and calcined coke.

In one or more embodiments, an Si-based negative electrode active material and/or an Sn-based negative electrode active material may be used as the material capable of doping and dedoping lithium. The Si-based negative electrode active material may be silicon, a silicon-carbon composite, SiOₓ (0<x≤2), an Si-based alloy, or a (e.g., any suitable) combination thereof.

The silicon-carbon composite may be a composite of silicon and amorphous carbon. According to one or more embodiments, the silicon-carbon composite may have a form including a silicon particle and amorphous carbon coated on a surface of the silicon particle.

In one or more embodiments, the silicon-carbon composite may further include crystalline carbon. For example, the silicon-carbon composite may include a core including crystalline carbon and a silicon particle and an amorphous carbon coating layer located on a surface of the core.

According to one or more embodiments, the negative electrode active material may include a carbon-based negative electrode active material. The carbon-based negative electrode active material may increase the degree of suppressing side reactions in the electrode.

The first binder is not particularly limited as long as the first binder may be fibrillated in a dry electrode film manufacturing step which will be described in more detail later. The fibrillation may refer to dividing a polymer into fine fibers. For example, the fibrillation may be performed using a mechanical shear force or the like. A surface of the fibrillated polymer fiber may be unraveled, and a plurality of fine fibers may be generated. The generated fine fibers may cause the electrode active material and/or a conductive additive described below to be entangled with each other, thereby enabling a dry electrode film to be manufactured.

In one or more embodiments, the first binder may include polytetrafluoroethylene (PTFE), a polyolefin, or a (e.g., any suitable) mixture thereof. In one or more embodiments, the first binder may include PTFE, in one or more embodiments, the first binder may be PTFE. In one or more embodiments, the PTFE may be included in an amount of 60 wt% or more, for example, an amount in a range of 90 wt% to 100 wt% or an amount of 100 wt%, based on the entire weight (e.g., a total weight of 100 wt%) of the first binder.

In one or more embodiments, the first binder may be included in a fibrillated state in the dry electrode film.

In one or more embodiments, in the dry electrode film, the electrode active material may be included in an amount in a range of 80 wt% to 99.5 wt%, for example, from 90 wt% to 99.5 wt%, and the first binder may be included in an amount in a range of 0.5 wt% to 20 wt%, for example, from 0.5 wt% to 10 wt%, based on a total weight of 100 wt% of the dry electrode film. Within the above ranges, it may be easy to manufacture the dry electrode film, and there may be an effect of increasing the binding strength between materials constituting the electrode due to the fibrillated binder.

In one or more embodiments, the dry electrode film may further include a conductive additive.

The conductive additive is not particularly limited as long as the conductive additive is electrically conductive and does not cause chemical changes in a battery. For example, in one or more embodiments, graphite such as natural graphite and/or artificial graphite; a carbon black-based compound such as carbon black, acetylene black, Ketjen black, channel black, furnace black, lamp black, and/or thermal black; a conductive fiber such as a carbon fiber and/or a metal fiber; metal powder such as fluorinated carbon, aluminum, and/or nickel powder; a conductive whisker such as zinc oxide and/or potassium titanate; a conductive metal oxide such as titanium oxide; a conductive material such as a polyphenylene derivative, and/or the like may be used as the conductive additive. In one or more embodiments, for uniformly mixing the conductive additive and increasing the conductivity thereof, the conductive additive may include one or more selected from the group consisting of activated carbon, graphite, carbon black, and a carbon nanotube, and in one or more embodiments, the conductive additive may include activated carbon.

In one or more embodiments, in the dry electrode film, the electrode active material may be included in an amount in a range of 80 wt% to 99 wt%, for example, from 90 wt% to 99.5 wt%, the first binder may be included in an amount in a range of 0.5 wt% to 20 wt%, for example, from 0.5 wt% to 10 wt%, and the conductive additive may be included in an amount in a range of 0.5 wt% to 20 wt%, for example, from 0.5 wt% to 10 wt%, based on a total weight of 100 wt% of the dry electrode film. Within the above ranges, it may be easy to manufacture the dry electrode film, and there may be an effect of imparting electronic conductivity.

In one or more embodiments, the electrode active material layer may further include a second binder, and the second binder may include a non-fibrillable binder. For example, the non-fibrillable binder may include one or more selected from among polyethylene oxide, polyvinylidene fluoride, and polyvinylidene fluoride-co-hexafluoropropylene.

According to another aspect of the present invention, there is provided a manufacturing method for the afore-mentioned electrode. The method includes the steps of:
(a) preparing a powdery mixture comprising an electrode active material and a binder;
(b) preparing a mixture mass by kneading the powdery mixture;
(c) obtaining an electrode powder by pulverizing the mixture mass;
(d) obtaining a film by calendering the electrode powder; and
(e) treating the film with a catecholamine-based compound-containing solution.

For example, the dry electrode film may be manufactured by the following steps.
(a) a process of preparing a powdery mixture including: an electrode active material; and a binder including a first binder;
(b) a process of preparing a mixture mass by kneading the powdery mixture;
(c) a process of obtaining electrode powder by pulverizing the mixture mass;
(d) a process of obtaining a film by calendering the electrode powder; and
(e) a process of manufacturing a dry electrode film including an electrode active material having a catecholamine-based compound-containing layer formed thereon and the first binder having a catecholamine-based compound-containing layer formed thereon by treating the film with a catecholamine-based compound-containing (e.g. dopamine-containing) solution.

First, the electrode active material and the binder including the first binder are mixed to prepare a powdery mixture. The mixing may be performed so that the electrode active material and the binder may be uniformly (e.g., substantially uniformly) distributed in the powdery mixture, and since the electrode active material and the binder are mixed in a powdery form, the mixing is not limited as long as simple mixing of the electrode active material and the binder is achieved. However, since the powdery mixture is for manufacturing a dry electrode film, the powdery mixture does not include (e.g., excludes) a (e.g., any) solvent. The mixing may be performed by dry mixing, for example, performed by inputting the materials into a device such as a blender. In one or more embodiments, the powdery mixture may further include the conductive additive.

In one or more embodiments, although the mixing time is not particularly limited, the mixing may be performed for 1 second to 10 minutes. Meanwhile, although the mixing speed is not particularly limited, the mixing speed may be appropriately and suitably controlled within a range of 3,000 revolutions per minute (rpm) to 30,000 rpm. In one or more embodiments, for high uniformity and control of the crystallinity of a binder resin, the electrode active material and the binder may be mixed at a speed of 5,000 rpm to 20,000 rpm for 30 seconds to 2 minutes, for example, at a speed of 10,000 rpm to 15,000 rpm for 30 seconds to 5 minutes, using a mixer to manufacture a dry electrode film.

Next, a kneading process for fibrillating the binder is performed on the mixture obtained above. The kneading is a step of forming a mixture mass of 100 wt% solid content by combining or connecting the electrode active materials and/or the conductive additive while the binder is fibrillated.

In one or more embodiments, the kneading in step (b) may be controlled at a speed of 10 rpm to 100 rpm. In one or more embodiments, the kneading may be controlled at a speed of 40 rpm to 70 rpm. The kneading may be performed for 1 minute to 30 minutes. For example, in one or more embodiments, the kneading may be performed at a speed of 40 rpm to 70 rpm for 3 minutes to 7 minutes. Meanwhile, in the kneading, a shear rate may be controlled within a range of 10/s to 500/s. In one or more embodiments of the present disclosure, the kneading may be performed for 1 minute to 30 minutes, and the shear rate may be controlled within a range of 30/s to 100/s.

In one or more embodiments, the kneading step may be performed at a high temperature and a pressure higher than or equal to normal pressure. In one or more embodiments, the kneading step may be performed at a pressure higher than normal pressure. In one or more embodiments, the kneading may be performed at a temperature in a range of 70 °C to 200 °C, or, from 90 °C to 150 °C.

In one or more embodiments, the kneading may be performed at a pressure higher than or equal to normal pressure, for example, at a pressure in a range of 1 atm to 3 atm, or, at a pressure in a range of 1.1 atm to 3 atm. If the kneading is performed at an excessively high pressure that deviates from the above range, it may not be suitable because excessive shear force and pressure may cause the formed fibers to be cut, or the density of the mixture mass may be too high. That is, according to the present disclosure, the effects intended by the present disclosure may be achieved if a low shear mixing process is performed at a high temperature and a pressure higher than or equal to normal pressure instead of performing high shear mixing.

Next, a step of obtaining electrode powder by pulverizing the mixture mass prepared by the kneading step again is performed.

In one or more embodiments, the mixture mass prepared through the kneading may be calendered immediately, but in these embodiments, the mixture mass may need to be prepared in the form of a thin film by being pressed at a strong pressure and high temperature, and accordingly, an issue in which the density of the film excessively increases or a film having a uniform density cannot be obtained may occur. Therefore, according to the present disclosure, the prepared mixture mass undergoes the pulverizing step.

The pulverizing is not limited but may be performed using a suitable pulverizing device such as a blender or a grinder. In one or more embodiments of the present disclosure, a pulverizing speed may be controlled within a range of 3,000 rpm to 30,000 rpm. Meanwhile, a pulverizing time may be appropriately and suitably controlled within a range of 1 second to 10 minutes. However, the pulverizing speed and pulverizing time are not particularly limited to the above ranges. For example, in one or more embodiments, the pulverizing may be performed at a speed of 5,000 rpm to 20,000 rpm for 30 seconds to 10 minutes or may be performed at a speed of 10,000 rpm to 18,000 rpm for 30 seconds to 5 minutes. Within the above ranges, pulverizing may be sufficiently performed, thereby facilitating film formation and decreasing the degree to which fine powder is generated.

The electrode powder is heated and pressed to manufacture a film. In one or more embodiments, the electrode powder obtained by completing the pulverizing step as above may be input to a calendering process.

The electrode powder is heated and pressed and processed into a sheet-type film by the calendering process. The calendering process may be performed using a pair of calendering rollers facing each other. In one or more embodiments of the present disclosure, the calendering process may be performed by a method in which the electrode powder passes between a plurality of calendering rollers.

In one or more embodiments, the electrode powder may be pretreated before performing the calendering process.

The pretreatment process may be performed by a method in which heat is applied to the electrode powder to maintain the temperature of the electrode powder at 80 °C or more, for example, at 100 °C or more, for a predetermined amount of time. The pretreatment process may be performed for 1 minute or more, and the pretreatment process time may be appropriately and suitably adjusted depending on the amount of the electrode powder. For example, in one or more embodiments, the temperature of the electrode powder may be maintained at 80 °C or more for 1 minute or more or may be maintained at 100 °C or more for 1 minute or more. In one or more embodiments, in order to prevent degradation of an electrode component, for example, a binder resin, included in the electrode powder, the heating temperature of the electrode powder may be controlled to be lower than the melting point of the binder resin. For example, in one or more embodiments, the heating temperature of the electrode powder may be controlled to be lower than 320 °C. The pretreatment process may be performed using a commonly used heating device such as a convection oven or an infrared heating device. Here, for example, the electrode powder does not stagnate while being stirred and heated.

Next, the film may be immersed in a catecholamine-based compound-containing (e.g. dopamine-containing) solution and allowed to react to manufacture a dry electrode film including an active material having a catecholamine-based compound-containing layer and a first binder having a catecholamine-based compound-containing layer. In one or more embodiments, the manufacturing of the dry electrode film may be performed by a liquid-phase reaction using a catecholamine-based compound-containing solution.

The catecholamine-based compound-containing layer may be prepared by treating the film with a catecholamine-based compound-containing solution. This will be described in detail later.

The catecholamine-based compound-containing layer may be prepared by the following steps.
(a) A process of preparing a catecholamine-based compound-containing solution; and
(b) a process of manufacturing a dry electrode film including an electrode active material having a catecholamine-based compound-containing layer formed thereon and a first binder having a catecholamine-based compound-containing layer formed thereon using the catecholamine-based compound-containing solution and the film.

First, a catecholamine-based compound-containing solution is prepared.

In one or more embodiments, the catecholamine-based compound-containing solution may be a tris(hydroxymethyl)aminomethane (Tris) buffer solution including dopamine chloride.

The catecholamine-based compound-containing layer may be prepared by the step of immersing the film in the prepared catecholamine-based compound-containing solution and allowing the film to react. In one or more embodiments, the catecholamine-based compound-containing layer may be prepared by immersing the film in the catecholamine-based compound-containing solution and aging the film at a temperature in a range of 30 °C to 100 °C for 5 hours to 24 hours.

In one or more embodiments of the present disclosure, the dry electrode film may have a thickness in a range of 100 micrometers (µm) to 200 µm, but the thickness is not particularly limited thereto. For example, in one or more embodiments, the dry electrode film may have a thickness ranging from 100 µm to 150 µm.

The electrode may further include a current collector.

The current collector is not particularly limited as long as the current collector provides high electrical conductivity and does not cause chemical changes in a battery. For example, stainless steel, aluminum, nickel, titanium, calcined carbon, copper, or aluminum, stainless steel, copper foil, nickel foil, stainless steel foil, titanium foil, nickel foam, copper foam, or a polymer substrate having a surface coated with a conductive metal and treated with carbon, nickel, titanium, silver, and/or the like may be used as the current collector. In one or more embodiments, the current collector may also have fine irregularities formed on a surface thereof to increase the adhesion of an electrode active material and may be in one or more suitable forms such as a film, a sheet, a foil, a net, a porous body, a foam, and/or a nonwoven body.

In one or more embodiments of the present disclosure, the current collector may have a thickness in a range of 10 µm to 50 µm, but the thickness is not particularly limited thereto. For example, in one or more embodiments, the current collector may have a thickness in a range of 10 µm to 20 µm.

### Rechargeable Lithium Battery

According to one or more embodiments, a rechargeable lithium battery may include an electrode of one or more embodiments of the present disclosure.

In one or more embodiments, the rechargeable lithium battery may comprise a positive electrode according to one or more embodiments of the present disclosure, and a negative electrode according to one or more embodiments of the present disclosure. In one or more embodiments, the rechargeable lithium battery may include a positive electrode according to one or more embodiments of the present disclosure and a negative electrode. In one or more embodiments, the rechargeable lithium battery may comprise a positive electrode and a negative electrode according to one or more embodiments of the present disclosure.

The negative electrode may be manufactured using a composition including one or more of the above-described negative electrode active materials. The negative electrode active material is the same as described herein. In one or more embodiments, the composition may further include a binder and/or a conductive agent. In one or more embodiments, the negative electrode may be manufactured through a wet process. The binder and the conductive agent may be selected from common types known to those skilled in the art.

The positive electrode may be manufactured using a composition including one or more of the above-described positive electrode active materials. The positive electrode active material is the same as described herein. In one or more embodiments, the composition may further comprise a binder and/or a conductive agent. In one or more embodiments, the anode (e.g., negative electrode) may be manufactured through a wet process. The binder and conductive material may be selected from common types known to those skilled in the art.

The rechargeable lithium battery may further include an electrolyte solution.

In one or more embodiments, the rechargeable lithium battery may further include an electrolyte. The electrolyte for the rechargeable lithium battery may include a non-aqueous organic solvent and a lithium salt.

The non-aqueous organic solvent acts as a medium through which ions involved in the electrochemical reaction of the battery may move and migrate.

The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof, and may be used alone or in combination of two or more.

In one or more embodiments, if a carbonate-based solvent is used, a cyclic carbonate and a chain-based carbonate may be used in combination.

Depending on the type of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a (e.g., any suitable) combination thereof on one or both (two opposite) surfaces of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or any copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and any combination thereof, but embodiments of the present disclosure are not limited thereto.

The organic material and the inorganic material may be mixed in one coating layer, or a coating layer including an organic material and a coating layer including an inorganic material may be stacked.

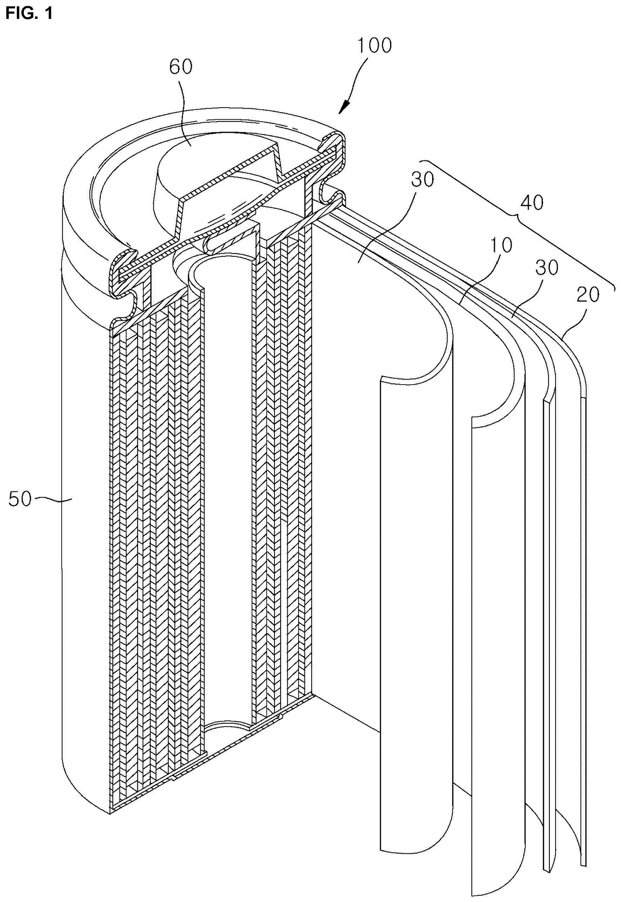

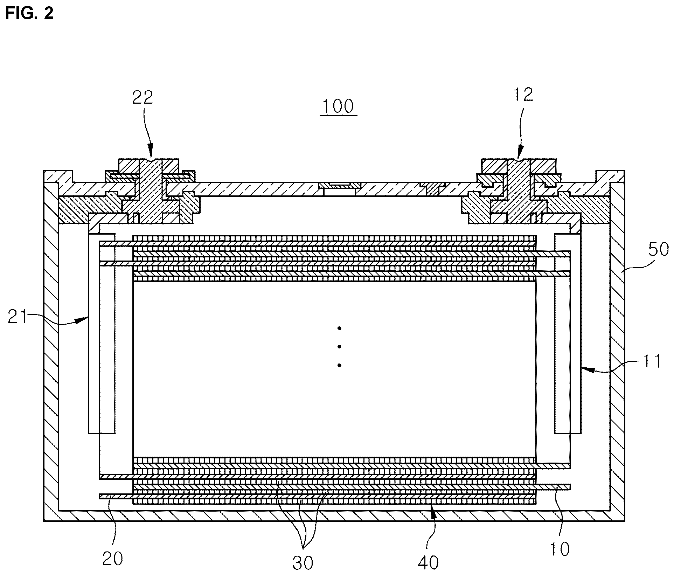

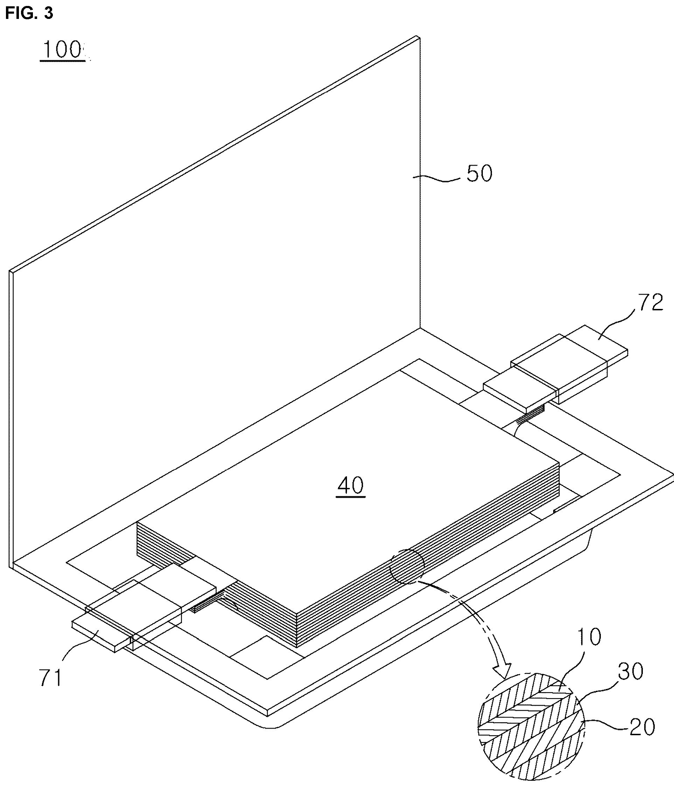

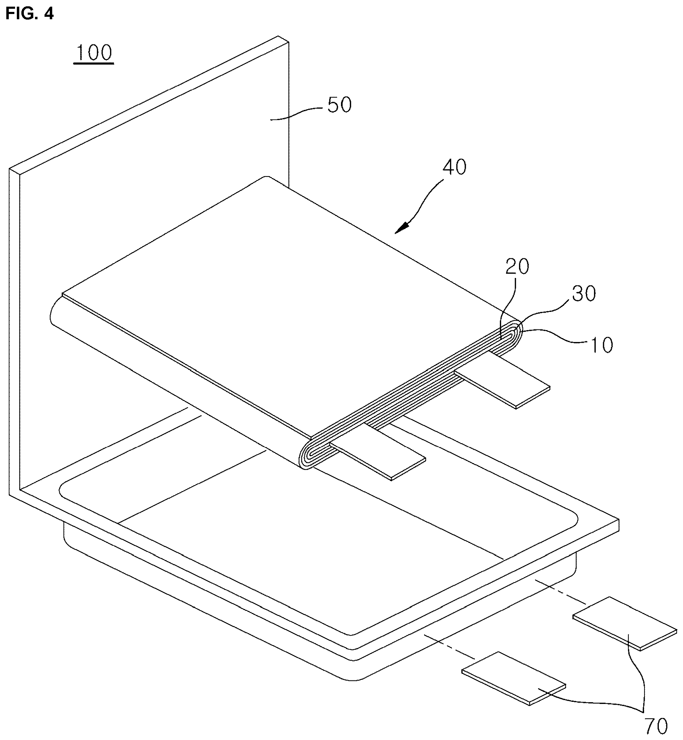

The rechargeable lithium battery may be classified into a cylindrical battery, a prismatic battery, a pouch-type battery, a coin-type battery, and/or the like, depending on the shape thereof. FIGS. 1 to 4 are each a schematic view illustrating a rechargeable lithium battery according to one or more embodiments of the present disclosure. FIG. 1 shows a cylindrical battery, FIG. 2 shows a prismatic battery, and FIG. 3 and FIG. 4 show pouch-type batteries. Referring to FIGS. 1 to 4, a rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). In one or more embodiments, the rechargeable lithium battery 100 may include a sealing member 60 sealing the case 50, as shown in FIG. 1. In one or more embodiments, as shown in FIG. 2, the rechargeable lithium battery 100 may include a positive lead tab 11, a positive terminal 12, a negative lead tab 21, and a negative terminal 22. in one or more embodiments, as shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or various types of electric devices, as non-limiting examples.

The above-described rechargeable lithium battery may be used to manufacture a battery pack. A battery pack according to one or more embodiments of the present disclosure may include an assembly of electrically connected individual batteries and a pack housing accommodating the assembly. The battery pack may further include components such as a busbar, a cooling unit, an external terminal, and the like for electrical connection of the batteries.

In one or more embodiments, the battery pack may be mounted in a vehicle. For example, the vehicle may be an electric vehicle, a hybrid vehicle, or a plug-in hybrid vehicle. The vehicle may be a four-wheel vehicle or a two-wheel vehicle. A vehicle according to one or more embodiments of the present disclosure may include the battery pack according to one or more embodiments of the present disclosure. The vehicle operates by receiving power from the battery pack according to one or more embodiments of the present disclosure.

Hereinafter, Examples and Comparative Examples of the present disclosure will be described. However, the following examples are merely example embodiments of the present disclosure, and the present disclosure is not limited to the following examples.

### Example 1

### Manufacture of dry electrode film

97.5 wt% of artificial graphite as a negative electrode active material and 2.5 wt% of polytetrafluoroethylene (PTFE) as a binder were input to a blender without any solvent and mixed at 10,000 rpm for 1 minute to obtain a mixture. The obtained mixture was input to a kneader and kneaded at 110 °C at a speed of 60 rpm for 5 minutes to obtain a mixture mass, and then the mixture mass was input to a blender and pulverized at 10,000 rpm for 40 seconds to obtain electrode powder. Then, the electrode powder was repeatedly pressed using calendering rolls (roll diameter: 200 mm, roll temperature: 80 °C) to obtain an active material layer (thickness: 150 µm).

### Preparation of dopamine-containing solution

Dopamine hydrochloride and a Tris buffer solution were mixed to prepare a dopamine-containing solution (pH 8.5).

### Manufacture of electrode

The prepared active material layer was immersed in the dopamine-containing solution and aged to manufacture a dry electrode film (thickness: 150 µm) having a polydopamine-containing layer formed on each of the negative electrode active material and the PTFE binder. The manufactured dry electrode film was laminated on a carbon-coated copper current collector to manufacture an electrode.

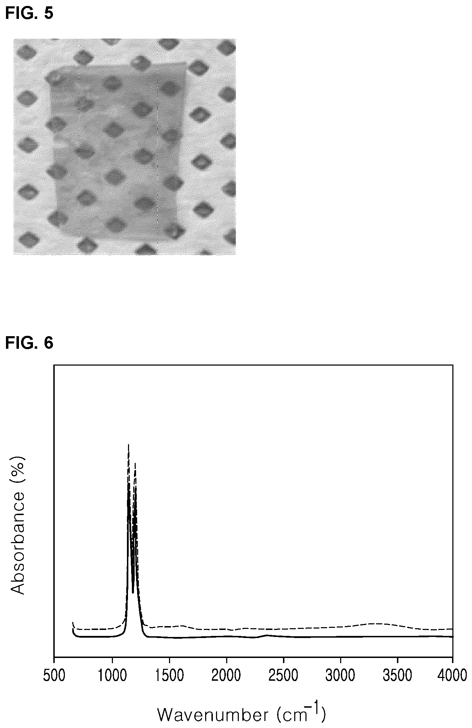

FIG. 5 is a photograph of a PTFE-containing film coated with a polydopamine-containing layer. Referring to FIG. 5, the relatively large quadrangular shape in the center represents the PTFE-containing film coated with the polydopamine-containing layer, and the scattered rhombic shapes represent Kimtec sheets. As shown in FIG. 5, it can be confirmed that the polydopamine-containing layer is coated on PTFE.

### Example 2

An electrode was manufactured in substantially the same manner as in Example 1, except that in Example 1, 98 wt% of artificial graphite as a negative electrode active material and 2 wt% of PTFE as a binder were used.

### Example 3

An electrode was manufactured in substantially the same manner as in Example 1, except that in Example 1, 99 wt% of artificial graphite as a negative electrode active material and 1 wt% of PTFE as a binder were used.

### Comparative Example 1

An electrode active material layer was prepared in substantially the same manner as in Example 1, and an electrode was manufactured in substantially the same manner as in Example 1, except that the prepared electrode active material layer was laminated on a carbon-coated copper current collector without a process of immersing the prepared electrode active material layer in a dopamine-containing solution.

### Comparative Example 2

A dopamine-containing solution was prepared in substantially the same manner as in Example 1. PTFE particles were added to the prepared dopamine-containing solution and treated by an immersion method to form a polydopamine coating layer on the surfaces of the PTFE particles.

97.5 wt% of artificial graphite as a negative electrode active material and 2.5 wt% of PTFE having the prepared polydopamine coating layer formed thereon as a binder were input to a blender and mixed at 10,000 rpm for 1 minute to obtain a mixture. The obtained mixture was input to a kneader and kneaded at 110 °C at a speed of 60 rpm for 5 minutes to obtain a mixture mass, and then the mixture mass was input to the blender and pulverized at 10,000 rpm for 60 seconds to obtain electrode powder. Then, the electrode powder was repeatedly pressed using calendering rolls (roll diameter: 200 mm, roll temperature: 80 °C) to obtain a dry electrode film (thickness: 150 µm). In the dry electrode film, a polydopamine-containing layer was not formed on the negative electrode active material.

The manufactured dry electrode film was laminated on a carbon-coated copper current collector to manufacture an electrode.

The following physical properties were evaluated for each of the dry electrode films and electrodes manufactured in the Examples and Comparative Examples.

### FT-IR analysis of polydopamine-coated PTFE film

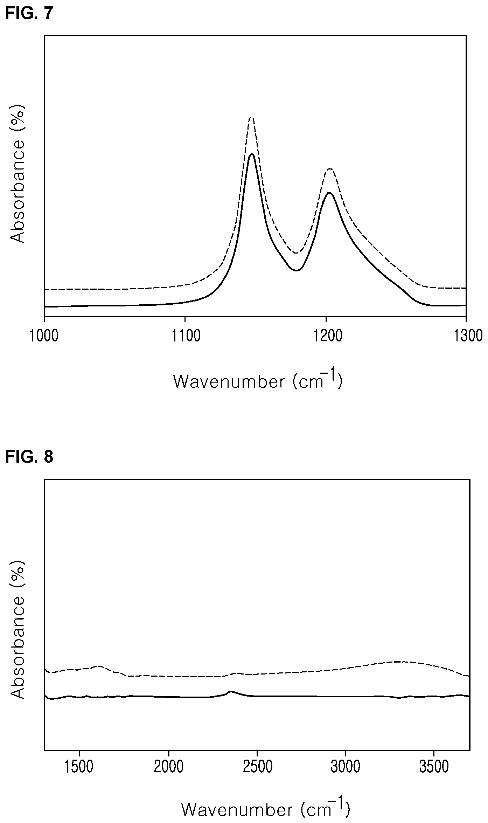

FT-IR analysis (analysis device: Thermo Scientific Nicolet Is50) was performed on each of the polydopamine-coated PTFE films of the Examples and Comparative Examples, and results thereof are shown in FIGS. 6 to 8. As shown in FIGS. 6 to 8, it can be confirmed that, in Example 1, a polydopamine-containing layer was formed due to exhibiting a different intensity of absorbance at the same wavelength compared to Comparative Example 1.

### XPS analysis of negative electrode

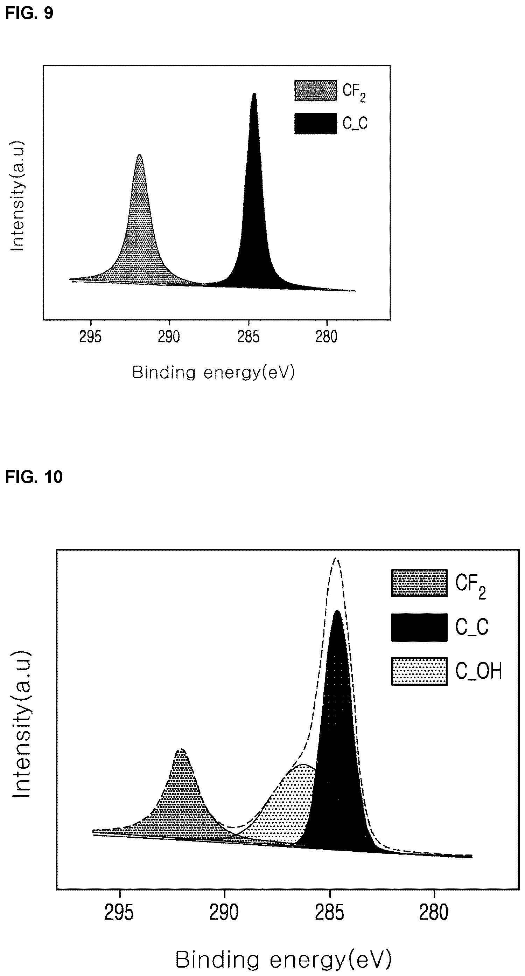

XPS analysis was performed on each of the negative electrodes of the Examples and Comparative Examples. The XPS analysis was performed using Thermo Scientific K-Alpha X-ray photoelectron spectroscopy device. Results thereof are shown in FIGS. 9 and 10. Comparing FIG. 9 (Comparative Example 1) and FIG. 10 (Example 1), it can be confirmed that a C-OH peak in FIG. 10 corresponds to the catechol group in dopamine, and a ratio of a CF₂ peak to a C-C peak is lower in FIG. 10 compared to FIG. 9. In this way, it can be confirmed that a dopamine-containing layer was formed on the negative electrode of Example 1.

### Evaluation of initial efficiency of battery

97 wt% of LiCoNiAl as a positive electrode active material, 1.5 wt% of carbon nanotubes as a conductive additive, and 1.5 wt% of polyvinyl fluoride were mixed, and water was added to the mixture to prepare a positive electrode slurry. The prepared positive electrode slurry was applied on aluminum foil, and the positive electrode slurry and the aluminum foil were dried and rolled to manufacture a positive electrode.

The positive electrode and a negative electrode manufactured in the Examples and Comparative Examples were used, a polyethylene separator (STAR 20, Asahi) was used as a separator, and a mixed solvent of ethylene carbonate (EC), ethyl methyl carbonate (EMC), and dimethyl carbonate (DMC) having a volume ratio of 3:3:4 in which 1.15 M LiPF₆ was dissolved was used as an electrolyte to manufacture a corresponding lithium-ion rechargeable battery having a capacity of 2,000 mAh.

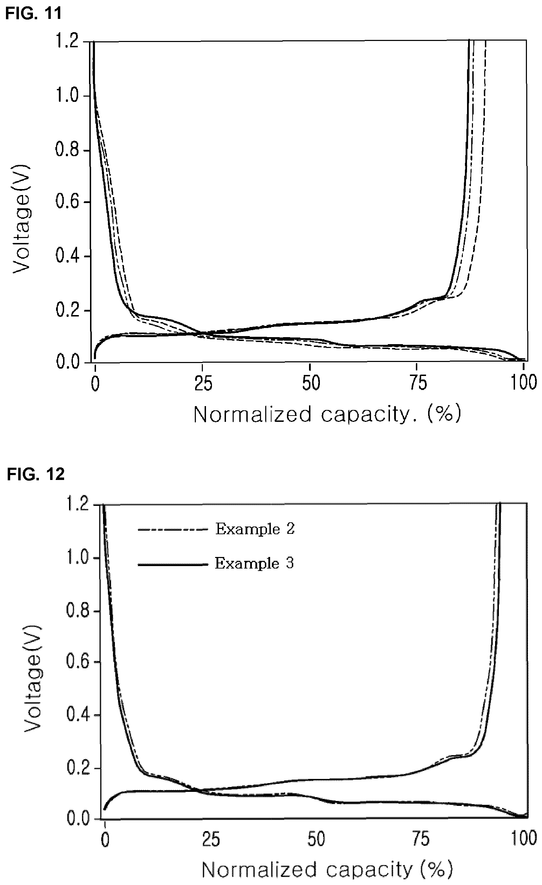

The manufactured lithium-ion rechargeable batteries were each charged at a constant current of 0.2 C from 2.8 V to an upper limit voltage of 4.3 V at 25 °C, were each charged at a constant voltage until the current decreased to 0.05 C, which was a termination condition, and then were each discharged at 0.2 C until the voltage decreased to a discharge cut-off voltage of 3.0 V to measure an initial discharge capacity. The efficiency was calculated as a ratio of (1^{st} discharge capacity) to (1^{st} charge capacity). Results thereof are shown in FIGS. 11 and 12 and Table 1.

**Table 1**

| | 1^{st} charge capacity (mAh/g) | 1^{st} discharge capacity (mAh/g) | Efficiency (%) |
|---|---|---|---|
| Example 1 | 379.04 | 348.97 | 92.1 |
| Example 2 | 372.40 | 346.89 | 93.15 |
| Example 3 | 358.46 | 336.68 | 93.92 |
| Comparative Example 1 | 386.56 | 338.21 | 87.4 |
| Comparative Example 2 | 381.83 | 339.59 | 89.1 |

As shown in Table 1 and FIGS. 11 and 12, it can be confirmed that the initial efficiency was improved in the electrodes of the Examples compared to those of Comparative Examples 1 and 2.

### Evaluation of service life of battery

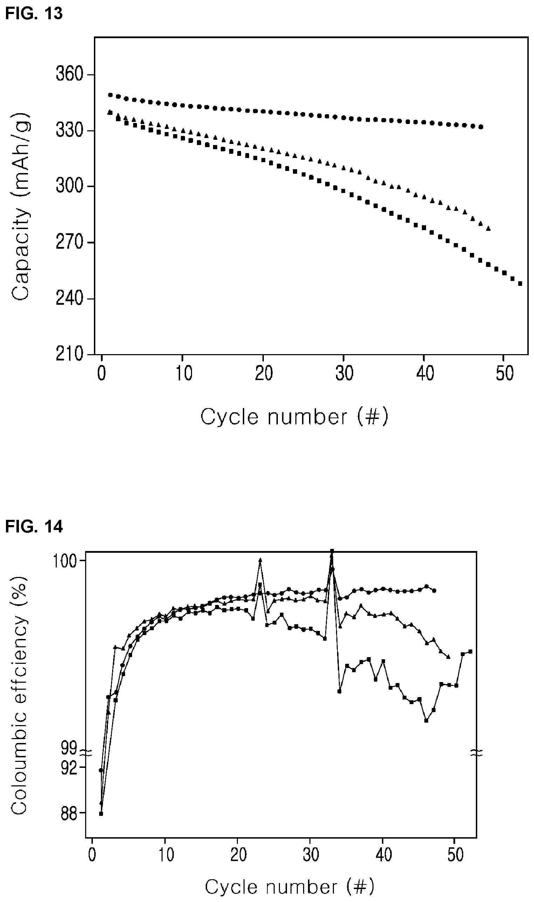

Batteries were each manufactured in the same manner as above. The above cycle was repeated 1 to 50 times. Results thereof are shown in FIGS. 13 and 14.

As shown in FIGS. 13 and 14, it can be seen that the capacity and coulombic efficiency were higher for the same cycle number in the batteries including the electrodes of the Examples as compared to the batteries including the electrodes of the Comparative Examples.

### Evaluation of ionic resistance according to cycle number of battery

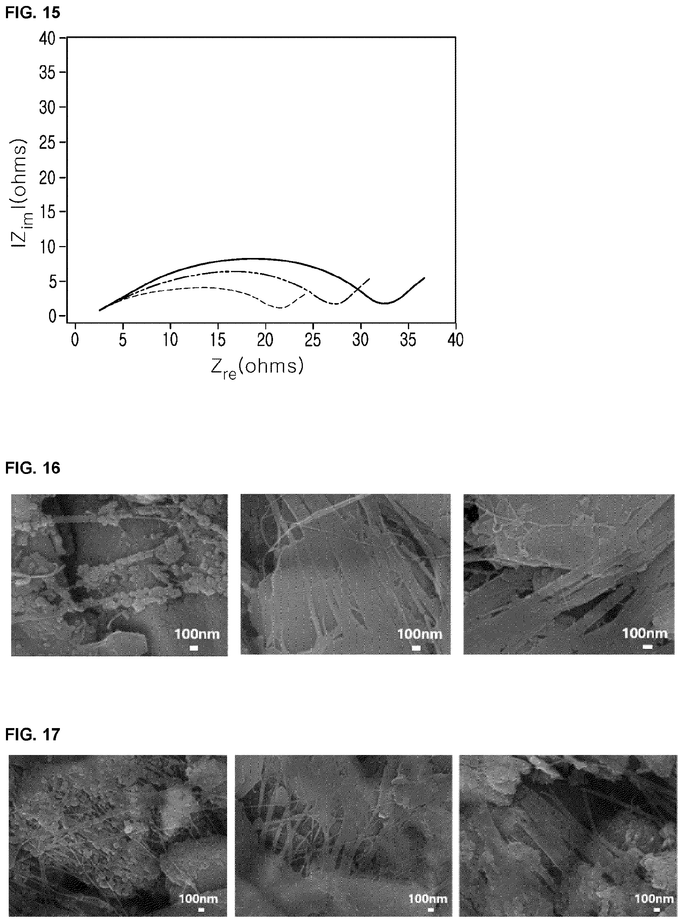

Batteries were each manufactured in the same manner as above. The above cycle was repeated 1 to 50 times. Then, ionic resistance was evaluated. The ionic resistance was evaluated by an electrochemical impedance spectroscopy method. Results thereof are shown in FIG. 15.

As shown in FIG. 15, it can be seen that the resistance was lower for the same cycle number in the batteries including the electrodes of the Examples as compared to the batteries including the electrodes of the Comparative Examples.

### SEM evaluation of electrode according to cycle number of battery

Batteries were each manufactured in the same manner as above. The above cycle was repeated 1 time and 30 times. Then, SEM analysis was performed on the surfaces of dry film-containing electrodes, and results thereof are shown in FIGS. 16 and 17.

As shown in FIGS. 16 and 17, it was confirmed that byproducts were locally generated on the surfaces of PTFE fibers formed near a graphite active material in the electrodes of the Comparative Examples, but not in the Examples.

According to the present disclosure, the electrode includes a dry electrode film including catecholamine-based compound and provides an effect of increasing the initial efficiency and service life of a battery.

However, effects that may be obtained through the present disclosure are not limited to the above-described effect, and other unmentioned technical effects should be clearly understood by those skilled in the art from the description of the disclosure provided herein.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

## Claims

1. An electrode, comprising:
an electrode active material layer comprising an active material and a binder,
wherein the active material and the binder is coated with a catecholamine-based compound-containing layer, the catecholamine-based compound-containing layer comprising or consisting of a catecholamine-based compound.

2. The electrode as claimed in claim 1, wherein the catecholamine-based compound-containing layer is on a surface of the active material and a surface of the binder.

3. The electrode as claimed in claim 1 or 2, wherein the catecholamine-based compound is in an amount of 95 wt% or more in the catecholamine-based compound-containing layer, based on a total weight of 100 wt% of the catecholamine-based compound-containing layer.

4. The electrode as claimed in any one of the preceding claims, wherein the catecholamine-based compound comprises one or more selected from among dopamine, norepinephrine, and epinephrine, and a polymer thereof.

5. The electrode as claimed in any one of the preceding claims, wherein the catecholamine-based compound is a polydopamine.

6. The electrode as claimed in any one of claims 1 to 3, wherein the polymer of the catecholamine-based compound comprises a repeating unit of one or more selected from among Chemical Formulas 1, 2, 3, and 4:

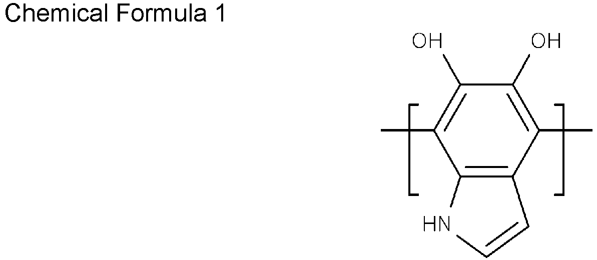

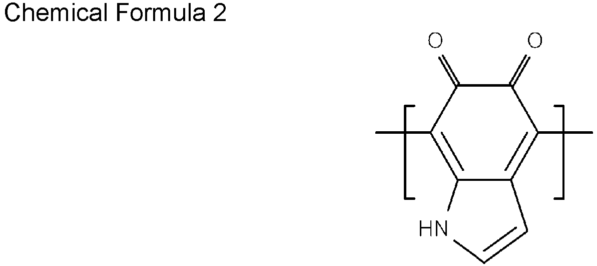

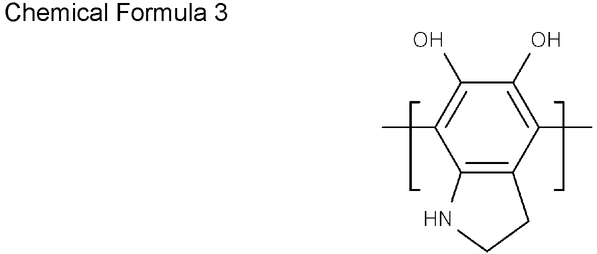

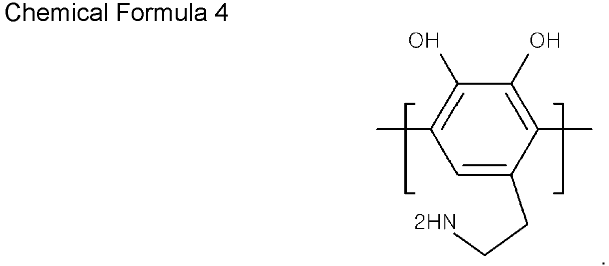

7. The electrode as claimed in any one of the preceding claims, wherein the binder comprises polytetrafluoroethylene, a polyolefin, or a mixture thereof.

8. The electrode as claimed in any one of the preceding claims, wherein the catecholamine-based compound-containing layer has a thickness in a range of 0.1 nm to 20 nm.

9. The electrode as claimed in, wherein the dry electrode film comprises 80 wt% to 99.5 wt% of the active material and 0.5 wt% to 20 wt% of the first binder, based on a total weight of 100 wt% of the dry electrode film.

10. The electrode as claimed in any one of the preceding claims, wherein the active material is a positive electrode active material or a negative electrode active material.

11. The electrode as claimed in claim 10, wherein the active material comprises a carbon-based negative electrode active material.

12. The electrode as claimed in any one of the preceding claims, wherein the electrode is an electrode for a rechargeable lithium battery.

13. A rechargeable lithium battery comprising the electrode as claimed in any one of the preceding claims.

14. A manufacturing method for the electrode as claims in claim 1, the method including the steps of:
(a) preparing a powdery mixture comprising an electrode active material and a binder;
(b) preparing a mixture mass by kneading the powdery mixture;
(c) obtaining an electrode powder by pulverizing the mixture mass;
(d) obtaining a film by calendering the electrode powder; and
(e) treating the film with a catecholamine-based compound-containing solution.
